# EUROPEAN PATENT APPLICATION

(11) **EP 4 664 802 A1**
(43) Date of publication of application: **17.12.2025**
(21) Application number: 23920560.2
(22) Date of filing: 10.02.2023
(51) Int. Cl.: H04L 1/00, H04W 8/24

(54) **COMMUNICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Stöckeler, Ferdinand
(86) International application number: PCT/CN2023/075547
(87) International publication number: WO 2024/164353

(57) **Abstract**

The present disclosure relates to a communication method and apparatus, and a device and a storage medium. The method comprises: receiving a physical downlink control channel (PDCCH) on the basis of a control resource set (CORESET), wherein the CORESET comprises a plurality of resource groups, and the number of resource element groups (REGs) included in at least one of the plurality of resource groups does not meet a first preset number. In the present disclosure, the number of REGs included in some resource groups is made to be greater than or less than a preset number, and the CORESET can be divided into an integer number of resource groups, such that a CCE in the CORESET is used for transmitting the PDCCH, thereby increasing a resource utilization rate.

## Description

### TECHNICAL FIELD

The disclosure relates to the field of communication technology, and in particular to a method and an apparatus for communication, a device, and a storage medium.

### BACKGROUND

In a new radio (NR) network, a basic building unit of a physical downlink control channel (PDCCH) is a resource element group (REG). One REG corresponds to a size of one physical resource block (PRB) in the frequency domain, i.e., corresponds to 12 resource elements (REs), and corresponds to a size of one orthogonal frequency division multiplexing (OFDM) symbol in the time domain. A plurality of REGs may form a REG bundle. One or more REG bundles may form a control channel element (CCE).

In current NR systems, one CCE may be composed of one or more REG bundles. A number of CCEs included in one PDCCH may be referred to as an aggregation level.

For certain frequency bands, to ensure the coverage of the PDCCH, the entire system bandwidth may be configured for PDCCH transmission. However, this may result in a situation where the number of REGs included in a control resource set (CORESET) cannot form an integer number of CCEs or REG bundles.

### SUMMARY

To overcome the problems existing in the related art, the disclosure provides a method and an apparatus for communication, a device, and a storage medium.

According to a first aspect of embodiments of the disclosure, a method for communication is provided. The method is performed by a terminal, including: receiving a physical downlink control channel (PDCCH) based on a control resource set (CORESET); in which the CORESET includes a plurality of resource groups, and a number of resource element groups (REGs) included in at least one resource group among the plurality of resource groups does not satisfy a first preset number.

In some implementations, the first preset number is a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold.

In some implementations, the number of REGs included in the at least one resource group among the plurality of resource groups that does not satisfy the first preset number, includes: the number of REGs included in the at least one resource group among the plurality of resource groups being less than the first preset number.

In some implementations, the number of REGs included in the at least one resource group among the plurality of resource groups that does not satisfy the first preset number, includes: the number of REGs included in the at least one resource group among the plurality of resource groups being greater than the first preset number and less than a second preset number.

In some implementations, there is one resource group including a number of REGs that do not satisfy the first preset number.

In some implementations, there are a plurality of resource groups each including a number of REGs that do not satisfy the first preset number.

In some implementations, an index corresponding to the resource group including the number of REGs that do not satisfy the first preset number is higher or lower than an index corresponding to a resource group in the CORESET including a number of REGs that satisfies the first preset number.

In some implementations, the first preset number is obtained via a pre-configuration or a protocol agreement.

In some implementations, the method further includes: performing de-rate-matching on the PDCCH based on a number of REGs included in resources occupied by the PDCCH.

In some implementations, the resource group includes at least one of: a control channel element (CCE); or a REG bundle.

According to a second aspect of embodiments of the disclosure, a method for communication is provided. The method is performed by a network device, including: sending a PDCCH based on a CORESET; in which the CORESET includes a plurality of resource groups, and a number of REGs included in at least one resource group among the plurality of resource groups does not satisfy a first preset number.

In some implementations, the first preset number is a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold.

In some implementations, the number of REGs included in the at least one resource group among the plurality of resource groups that does not satisfy the first preset number, includes: the number of REGs included in the at least one resource group among the plurality of resource groups being less than the first preset number.

In some implementations, the number of REGs included in the at least one resource group among the plurality of resource groups that does not satisfy the first preset number, includes: the number of REGs included in the at least one resource group among the plurality of resource groups being greater than the first preset number and less than a second preset number.

In some implementations, there is one resource group including a number of REGs that do not satisfy the first preset number.

In some implementations, there are a plurality of resource groups each including a number of REGs that do not satisfy the first preset number.

In some implementations, an index corresponding to the resource group including the number of REGs that do not satisfy the first preset number is higher or lower than an index corresponding to a resource group in the CORESET including a number of REGs that satisfies the first preset number.

In some implementations, the first preset number is obtained via a pre-configuration or a protocol agreement.

In some implementations, the method further includes: performing rate-matching on the PDCCH based on a number of REGs included in resources occupied by the PDCCH.

In some implementations, the resource group includes at least one of: a CCE; or a REG bundle.

According to a third aspect of embodiments of the disclosure, an apparatus for communication is provided. The apparatus includes a receiving module, configured to receive a PDCCH based on a CORESET; in which the CORESET includes a plurality of resource groups, and a number of REGs included in at least one resource group among the plurality of resource groups does not satisfy a first preset number.

In some implementations, the first preset number is a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold.

In some implementations, the number of REGs included in the at least one resource group among the plurality of resource groups that does not satisfy the first preset number, includes: the number of REGs included in the at least one resource group among the plurality of resource groups being less than the first preset number.

In some implementations, the number of REGs included in the at least one resource group among the plurality of resource groups that does not satisfy the first preset number, includes: the number of REGs included in the at least one resource group among the plurality of resource groups being greater than the first preset number and less than a second preset number.

In some implementations, there is one resource group including a number of REGs that do not satisfy the first preset number.

In some implementations, there are a plurality of resource groups each including a number of REGs that do not satisfy the first preset number.

In some implementations, an index corresponding to the resource group including the number of REGs that do not satisfy the first preset number is higher or lower than an index corresponding to a resource group in the CORESET including a number of REGs that satisfies the first preset number.

In some implementations, the first preset number is obtained via a pre-configuration or a protocol specification.

In some implementations, the apparatus further includes: a processing module, configured to perform de-rate-matching on the PDCCH based on a number of REGs included in resources occupied by the PDCCH.

In some implementations, the resource group includes at least one of: a CCE; or a REG bundle.

According to a fourth aspect of embodiments of the disclosure, an apparatus for communication is provided. The apparatus includes a sending module, configured to send a PDCCH based on a CORESET; in which the CORESET includes a plurality of resource groups, and a number of REGs included in at least one resource group among the plurality of resource groups does not satisfy a first preset number.

In some implementations, the first preset number is a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold.

In some implementations, the number of REGs included in the at least one resource group among the plurality of resource groups that does not satisfy the first preset number, includes: the number of REGs included in the at least one resource group among the plurality of resource groups being less than the first preset number.

In some implementations, the number of REGs included in the at least one resource group among the plurality of resource groups that does not satisfy the first preset number, includes: the number of REGs included in the at least one resource group among the plurality of resource groups being greater than the first preset number and less than a second preset number.

In some implementations, there is one resource group including a number of REGs that do not satisfy the first preset number.

In some implementations, there are a plurality of resource groups each including a number of REGs that do not satisfy the first preset number.

In some implementations, an index corresponding to the resource group including the number of REGs that do not satisfy the first preset number is higher or lower than an index corresponding to a resource group in the CORESET including a number of REGs that satisfies the first preset number.

In some implementations, the first preset number is obtained via a pre-configuration or a protocol agreement.

In some implementations, the apparatus further includes: a processing module, configured to perform rate-matching on the PDCCH based on a number of REGs included in resources occupied by the PDCCH.

In some implementations, the resource group includes at least one of: a CCE; or a REG bundle.

According to a fifth aspect of embodiments of the disclosure, a communication device is provided. The communication device includes: a processor; and a memory storing instructions executable by the processor; in which the processor is configured to: perform the method according to the first aspect and any of the method according to the first aspect.

According to a sixth aspect of embodiments of the disclosure, a communication device is provided. The communication device includes: a processor; and a memory storing instructions executable by the processor; in which the processor is configured to: perform the method according to the second aspect and any one of the methods according to the second aspect.

According to a seventh aspect of embodiments of the disclosure, a non-transitory computer-readable storage medium is provided. When instructions in the storage medium are executed by a processor of a terminal, the terminal is caused to perform the method according to the first aspect and any one of the methods according to the first aspect.

According to an eighth aspect of embodiments of the disclosure, a non-transitory computer-readable storage medium is provided. When instructions in the storage medium are executed by a processor of a network device, the network device is caused to perform the method according to the second aspect and any one of the methods according to the second aspect.

Technical solutions provided in embodiments of the disclosure may include the following beneficial effects. By enabling a number of REGs included in some resource groups to be greater than or less than a preset number, the CORESET may be divided into an integer number of resource groups, which facilitates transmitting the PDCCH via CCEs in the CORESET, and thus improves resource utilization.

It should be understood that the above general description and the following detailed description are only exemplary and explanatory, and do not limit the disclosure.

### BRIEF DESCRIPTION OF THE DRAWINGS

The figures here are incorporated into the specification and constitute a part of the specification, showing that they conform to the embodiments of the disclosure, and are used together with the specification to explain the principles of the disclosure.
FIG. 1 is a schematic diagram illustrating a wireless communication system according to an exemplary embodiment.
FIG. 2 is a schematic diagram illustrating a physical downlink control channel (PDCCH) resource mapping according to an exemplary embodiment.
FIG. 3 is a flow chart illustrating a method for communication according to an exemplary embodiment.
FIG. 4 is a flow chart illustrating another method for communication according to an exemplary embodiment.
FIG. 5 is a block diagram illustrating an apparatus for communication according to an exemplary embodiment.
FIG. 6 is a block diagram illustrating another apparatus for communication according to an exemplary embodiment.
FIG. 7 is a block diagram illustrating a communication device according to an exemplary embodiment.
FIG. 8 is a block diagram illustrating another communication device according to an exemplary embodiment.

### DETAILED DESCRIPTION

Reference will now be made in detail to the exemplary embodiments, examples of which are illustrated in the accompanying figures. When the following description refers to the accompanying figures, the same numerals in different figures represent the same or similar elements unless otherwise indicated. The implementations described in the following exemplary embodiments do not represent all implementations consistent with the disclosure.

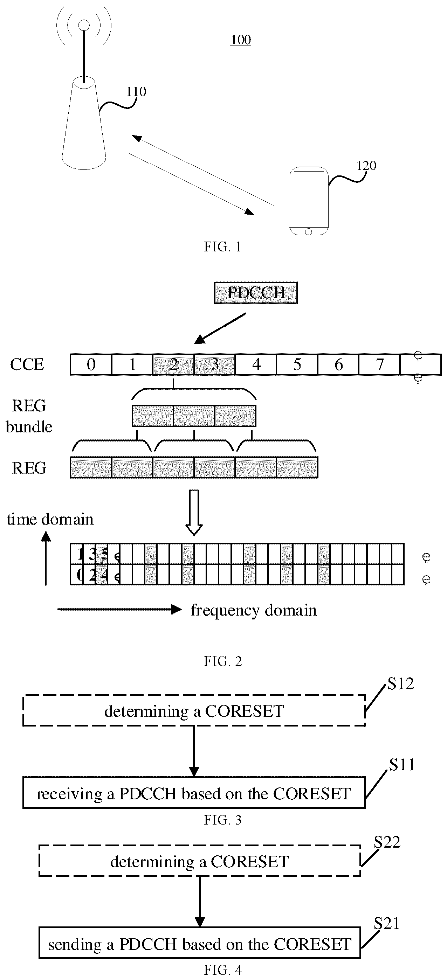

A method for communication according to embodiments of the disclosure may be applied to a wireless communication system 100 illustrated in FIG. 1. The wireless communication system includes a network device 110 and a terminal 120. It may be understood that the wireless communication system in FIG. 1 is only for schematic illustration, and the wireless communication system may also include other network devices, such as a core network device, a wireless relay device, and a wireless backhaul device, which are not illustrated in FIG. 1. The number of network devices and the number of terminals in the wireless communication system are not limited in embodiments of the disclosure.

It may be further understood that the wireless communication system according to embodiments of the disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access with collision avoidance. The networks, according to capacities, speeds, delays, and other factors of different networks, may be divided into a second generation (2G) network, a third generation (3G) network, a fourth generation (4G) network, or a future evolution network, such as a fifth generation wireless communication system (5G) network, which may also be called a new radio (NR) network. For convenience of descriptions, the wireless communication network may be referred simply as a network sometimes in the disclosure.

Further, the network device 110 involved in the disclosure may also be referred to as a radio access network (RAN) device. The RAN device may be a base station, an evolved node B (eNB), a home base station, an access point (AP) in a wireless fidelity (WiFi) system, a wireless relay node, a wireless backhaul node, a transmission point (TP), a transmission and reception point (TRP), or the like, or the like; may also be a next generation base station (gNB) in an NR system; or may also be a component or a part of device that constitutes a base station. When it is a vehicle-to-everything (V2X) communication system, the network device may also be a vehicle-mounted device. It should be understood that the specific technology and specific device form adopted by the network device are not limited in embodiments of the disclosure.

Further, the terminal 120 according to the disclosure may also be referred to as a terminal device, a user equipment (UE), a mobile station (MS), a mobile terminal (MT), or the like. The terminal is a device providing voice and/or data connectivity for a user. For example, the terminal may be a handheld device or a vehicle-mounted device with a wireless connection function, , or the like. Currently, some examples of the terminal are: mobile phones, pocket personal computers (PPCs), palmtop computers, personal digital assistants (PDAs), laptops, tablets, wearable devices, vehicle-mounted devices, or the like. In addition, when it is a V2X communication system, the terminal may also be a vehicle-mounted device. It should be understood that the specific technology and specific device form adopted by the terminal are not limited in embodiments of the disclosure.

In embodiments of the disclosure, the network device 110 and the terminal 120 may adopt any feasible wireless communication technology to achieve mutual data transmission. In this case, a transmission channel used by the network device 110 to send data or control information to the terminal 120 is referred to as a downlink (DL) channel, and a transmission channel used by the terminal 120 to send data or control information to the network device 110 is referred to as an uplink (UL) channel. It may be understood that the network device involved in the embodiments of the disclosure may be a base station. Of course, the network device may also be any other possible network device, and the terminal may be any possible terminal, which is not limited in the disclosure.

In a NR network, a basic building unit of a PDCCH is a REG. One REG corresponds to a size of one PRB in the frequency domain, i.e., corresponds to 12 REs, and corresponds to a size of one OFDM symbol in the time domain. A plurality of REGs may form a REG bundle. One or more REG bundles may form a CCE.

In current NR systems, one CCE may be composed of one or more REG bundles, for example, one CCE includes 6 REGs. In current NR systems, one PDCCH may be composed of 1 CCEs, 2 CCEs, 4 CCEs, 8 CCEs, or 16 CCEs. The number of CCEs included in the PDCCH may be referred to as an aggregation level. It may be understood that in the case that the information bits to be transmitted by the PDCCH are fixed, the aggregation level may be determined by channel conditions. For example, when the channel conditions are relatively good, a smaller aggregation level may be adopted; and when the channel conditions are relatively poor, a larger aggregation level may be adopted. The reason lies in that when the channel conditions are poor, more repeated transmissions may be required, and thus more CCEs are needed for resource mapping of repeatedly transmitted data.

In NR systems, a region where PDCCH transmission may be performed may be referred to as a CORESET. The CORESET may include a plurality of PRBs in the frequency domain. The current NR protocols specify that a number of PRBs occupied by a CORESET must be an integer multiple of 6, i.e., the PRBs occupied by the CORESET may form an integer number of CCEs. In the time domain, the CORESET may occupy 1 OFDM symbol, 2 OFDM symbols, or 3 OFDM symbols. The CORESET may be shared by a plurality of PDCCHs, and the PDCCH to be transmitted may be mapped to corresponding resources within the CORESET according to corresponding rules.

For example, as shown in FIG. 2, a process of performing resource mapping of the PDCCH is illustrated. It may be determined that the PDCCH is mapped to which portion of CCEs in the CORESET, for example, CCE 2 and CCE 3 in the FIG. 2, based on a terminal identification (ID) or a predefined value. The terminal ID may be a UE-ID.

Each CCE includes 6 REGs. The plurality of REGs may form a REG bundle. The number of REGs included in the REG bundle may be determined based on the number of OFDM symbols occupied by the CORESET. For example, if two OFDM symbols are occupied in the time domain as shown in FIG. 2, one REG bundle is formed by two REGs. Then, according to the mapping manner adopted by the REG bundle, the REGs may be mapped to corresponding time-domain resources and frequency-domain resources in the CORESET to transmit the PDCCH.

However, for a dedicated frequency band with a bandwidth of less than 5 MHz, it is studied in the release R18 that the NR technology is supported in some dedicated spectrums of a long term evolution (LTE) system or a global system for mobile communications - railway (GSM-R). The dedicated spectrums mainly provide communication services for dedicated applications such as dedicated communication for power systems/railway systems, and public protection and disaster relief in some regions.

These spectrums only support a subcarrier spacing of 15 kHz. For example, in the case of frequency bands n8, n26, and n28, the supported system bandwidth is 3 MHz. In the case of a frequency band n100, the supported system bandwidth ranges from 2.8 MHz to 3.6 MHz. According to agreements on a radio frequency (RF) channel bandwidth in the NR and LTE systems, the number of available RBs for 3 MHz is 15.

In current NR systems, a REG bundle in a PDCCH may include 6 REGs in a non-interleaved mode. In an interleaved mode, when the number of OFDM symbols is 1, each REG bundle may include 2 or 6 REGs; when the number of OFDM symbols is 2, each REG bundle may include 2 or 6 REGs; when the number of OFDM symbols is 3, each REG bundle may include 3 or 6 REGs.

However, there are fewer resources available on some dedicated frequency bands. For example, the entire system bandwidth on some specific frequency bands may only have 13 to 19 RBs. To ensure the coverage of the PDCCH, the entire system bandwidth may be configured for the PDCCH transmission. Such configuration may result in a situation where the number of REGs included in the CORESET cannot form an integer number of CCEs or REG bundles. For example, when the system bandwidth has 13 PRBs and the CORESET occupies 3 OFDM symbols, there are 39 REGs included. In this case, only 6 CCEs may be formed, leaving 3 REGs.

Thus, in the disclosure, by enabling a number of REGs included in some resource groups to be greater than or less than a preset number, the CORESET may be divided into an integer number of resource groups, which facilitates transmitting the PDCCH via CCEs in the CORESET, and thus improves the resource utilization.

FIG. 3 is a flow chart illustrating a method for communication according to an exemplary embodiment. As shown in FIG. 3, the method is performed by a terminal and may include the following steps S11 to S12.

At step S11, a PDCCH is received based on a CORESET.

In some embodiments, the terminal may receive the PDCCH based on the CORESET. The CORESET may include a plurality of resource groups. There may be at least one resource group among the plurality of resource groups, which includes a number of REGs that does not satisfy a first preset number. Optionally, except for the resource group including the number of REGs that does not satisfy the first preset number, the numbers of REGs included in other resource groups satisfy the first preset number.

For example, the number of REGs that does not satisfy the first preset number may be considered as the number of REGs not satisfying a preset rule. The preset rule represents a rule that the number of REGs included in the resource group needs to satisfy under preset conditions. For example, the rule may specify that the number of REGs included in the resource group under preset conditions should be equal to the first preset number.

For example, the first preset number may be 6. For example, the first preset number may be determined by the terminal itself, determined by a signaling from a network-side device, or determined based on protocol rules. Determination by the terminal itself may mean that the terminal pre-configures the first preset number and determines it based on its own pre-configuration.

It may be understood that among the plurality of resource groups, there may be at least one specific resource group. The number of REGs included in the specific resource group is not equal to the first preset number, such as 6. For example, the number of REGs included in the specific resource group may be greater than 6. For another example, the number of REGs included in the specific resource group may be less than 6.

In some embodiments, the specific resource group may be determined via an index in a CCE. For example, the index of the specific resource group is the maximum or minimum among indexes of other resource groups in the CCE.

It may be understood that optionally, prior to S11, the method may further include the following step S12.

At step S12, the CORESET is determined.

In some embodiments, the terminal may determine the CORESET to receive the PDCCH based on corresponding resources in the CORESET.

For example, the terminal may receive a physical broadcast channel (PBCH), parse a master information block (MIB) in the PBCH, and determine a CORESET configured by the network device, such as time-frequency domain positions and/or window positions of CORESET#0. This enables scheduling reception of the PDCCH in S11 based on the CORESET configured by the network device.

In the disclosure, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, the first preset number may be a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold. That is, the first preset number may be set to be identical to the number of REGs included in the resource group when the minimum system bandwidth supported by the terminal is greater than the bandwidth threshold; or the first preset number may be set to be identical to the number of REGs included in the resource group when the communication system used by the terminal for receiving the PDCCH is the communication system corresponding to the specific frequency band; or the first preset number may be set to be identical to the number of REGs included in the resource group when the minimum system bandwidth supported by the communication system is greater than the bandwidth threshold.

Specifically, in some embodiments, the first preset number may be the number of REGs included in the resource group in the case that the minimum system bandwidth supported by the terminal is greater than the bandwidth threshold.

For example, the bandwidth threshold may be 5 MHz, and the minimum system bandwidth supported by the terminal is greater than 5 MHz. For example, such terminals may include various terminals during R15 to R17. The minimum system bandwidths supported by such terminals are all greater than 5 MHz. It may be understood that the first preset number may be the number of REGs included in the resource group in the case of corresponding to various terminals during R15 to R17.

For example, in the case of corresponding to various terminals during R15 to R17, the number of REGs included in the resource group is 6, thus the first preset number is 6.

It may be understood that the terminal is aware of whether the minimum system bandwidth supported by the terminal itself is greater than the bandwidth threshold.

In some embodiments, in the case that the minimum system bandwidth supported by the terminal is less than the bandwidth threshold, it may be determined that the CORESET may include a resource group including a number of REGs that does not satisfy the first preset number. For example, in the case that the bandwidth threshold may be 5 MHz and the minimum system bandwidth supported by the terminal (e.g., 3 MHz, 2.8 MHz, or 3.6 MHz)is less than 5 MHz, the CORESET may include a resource group including a number of REGs that does not satisfy the first preset number. For example, the number of REGs included in the specific resource group may be greater than the first preset number, or the number of REGs included in the specific resource group may be less than the first preset number. The first preset number is, for example, 6.

Specifically, in some embodiments, the first preset number may be the number of REGs included in the resource group in the case that the communication system used by the terminal for receiving the PDCCH is the communication system corresponding to the specific frequency band.

For example, when the communication system operates in the specific frequency band, it may be considered as being under preset conditions. The specific frequency band is, for example, any frequency band except for the n8, n26, n28, and n100. The communication system may be constituted by the terminal and the network device. In the communication system, data transmission is performed between the terminal and the network device. It may be understood that the first preset number may be the number of REGs included in the resource group in the case that the communication system operates in the specific frequency band.

For example, in the case that the communication system operates in any frequency band except for the n8, n26, n28, and n100, the number of REGs included in the resource group is 6, thus the first preset number is 6.

It may be understood that the terminal determines whether the communication system communicating with the network device is of a specific frequency band based on the preset rules. Alternatively, the terminal determines to communicate with the network device in the communication system of the specific frequency band based on indication information.

In some embodiments, in the case that the communication system used by the terminal for receiving the PDCCH is a communication system corresponding to dedicated frequency bands, it may be determined that the CORESET may include a resource group including a number of REGs that does not satisfy the first preset number. The dedicated frequency bands may be frequency bands such as n8, n26, n28, n100, etc. It may be understood that the dedicated frequency bands may be any frequency bands except for the aforementioned specific frequency bands.

For example, in the case that the communication system used by the terminal for receiving the PDCCH is of the dedicated frequency bands such as n8, n26, n28, or n100, the CORESET may include a resource group including a number of REGs that does not satisfy the first preset number. For example, the number of REGs included in the specific resource group may be greater than the first preset number, or the number of REGs included in the specific resource group may be less than the first preset number. The first preset number is, for example, 6.

Specifically, in some embodiments, the first preset number may be the number of REGs included in the resource group in the case that the minimum system bandwidth supported by the communication system is greater than the bandwidth threshold.

For example, the minimum system bandwidth supported by the communication system is greater than 5 MHz. It may be understood that this embodiment is from the perspective of the communication system, which may include various communication systems operating during R15 to R17. The first preset number may be the number of REGs included in the resource group in the case that the minimum system bandwidth supported by the communication system is greater than 5 MHz.

For example, in the case that the minimum system bandwidth supported by the communication system is greater than 5 MHz, the number of REGs included in the resource group is 6, thus the first preset number is 6.

It may be understood that after accessing the network, the terminal may determine whether the minimum system bandwidth supported by the communication system is greater than 5 MHz via information communicated with the network device. Alternatively, the terminal may determine whether the minimum system bandwidth supported by the communication system is greater than 5 MHz based on the preset rules or protocol agreements.

In some embodiments, in the case that the minimum system bandwidth supported by the communication system is less than the bandwidth threshold, it may be determined that the CORESET may include a resource group including a number of REGs that does not satisfy the first preset number. For example, in the case that the bandwidth threshold may be 5 MHz and the minimum system bandwidth supported by the communication system (e.g., 3 MHz, 2.8 MHz, or 3.6 MHz) is less than 5 MHz, the CORESET may include a resource group including a number of REGs that does not satisfy the first preset number. For example, the number of REGs included in the specific resource group may be greater than the first preset number, or the number of REGs included in the specific resource group may be less than the first preset number. The first preset number is, for example, 6.

The various scenarios are adapted to the disclosure, and in corresponding scenarios, by enabling the number of REGs included in some resource groups to be greater than or less than a preset number, the CORESET may be divided into the integer number of resource groups, which facilitates transmitting the PDCCH via CCEs in the CORESET, and thus improves the resource utilization.

In the method for communication provided in embodiments of the disclosure, the number of REGs included in the at least one resource group among the plurality of resource groups that does not satisfy the first preset number, includes: the number of REGs included in the at least one resource group among the plurality of resource groups being less than the first preset number.

In some embodiments, the resource group including the number of REGs that does not satisfy the first preset number may be a resource group including a number of REGs that is less than the first preset number. That is, there may be at least one resource group among the plurality of resource groups that includes the number of REGs being less than the first preset number.

For example, there is at least one resource group that includes the number of REGs being less than 6.

In the disclosure, for the resource group including the number of REGs that does not satisfy the first preset number, the number of REGs may be less than the number of REGs in a conventional resource group, which facilitates division of the CORESET into the integer number of resource groups, facilitates transmitting the PDCCH via CCEs in the CORESET, and thus improves the resource utilization.

In the method for communication provided in embodiments of the disclosure, the number of REGs included in the at least one resource group among the plurality of resource groups that does not satisfy the first preset number, includes: the number of REGs included in the at least one resource group among the plurality of resource groups being greater than the first preset number and less than a second preset number.

In some embodiments, the resource group including the number of REGs that does not satisfy the first preset number may be a resource group including a number of REGs that is greater than the first preset number and less than the second preset number. That is, there may be at least one resource group among the plurality of resource groups that includes the number of REGs being greater than the first preset number and less than the second preset number.

The second preset number may be N times the first preset number, in which N is a positive integer greater than 2.

For example, there is at least one resource group that includes the number of REGs being greater than 6 and less than 12.

It may be understood that the purpose of setting the second preset number is to avoid an excessive number of REGs in the resource group including the number of REGs that does not satisfy the first preset number. When N is 2, it may be ensured a situation that a result after the first preset number is subtracted from the number of REGs included in the resource group including the number of REGs that does not satisfy the first preset number, still does not exceed the first preset number.

In the disclosure, for the resource group including the number of REGs that does not satisfy the first preset number, the number of REGs may be greater than the number of REGs in the conventional resource group and less than the second preset number, which facilitates division of the CORESET into the integer number of resource groups, which facilitates transmitting the PDCCH via CCEs in the CORESET, and thus improves the resource utilization.

In the method for communication provided in embodiments of the disclosure, there is one resource group including a number of REGs that do not satisfy the first preset number.

In some embodiments, in response to the number of REGs being less than the first preset number, there may be one resource group, including the number of REGs that do not satisfy the first preset number.

For example, if the CORESET includes 51 REGs, the first preset number is 6, and the resource group is a CCE. Then each of CCE#0 to CCE#7 may include 6 REGs, and CCE#8 includes 3 REGs.

In some embodiments, in response to the number of REGs being greater than the first preset number and less than the second preset number, there may be one resource group, including the number of REGs that do not satisfy the first preset number.

For example, if the CORESET includes 51 REGs, the first preset number is 6, the second preset number is 12, and the resource group is a CCE. Then each of CCE#0 to CCE#6 may include 6 REGs, and CCE#7 includes 9 REGs.

In the disclosure, by allowing that the number of REGs included in only one resource group is greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, there may be a plurality of such resource groups, each including the number of REGs that do not satisfy the first preset number.

In some embodiments, in response to the number of REGs being less than the first preset number, there are a plurality of resource groups each including the number of REGs that do not satisfy the first preset number.

For example, the number of resource groups each including the number of REGs less than the first preset number may be determined as follows. For example, it is assumed that integers *x* and *y* satisfy *ax + (a-1) y = z,* in which *z* represents the total number of REGs included in the CORESET, and *a* represents the first preset number. Taking *a* is equal to 6 as an example, *x* and *y* should satisfy 6*x* + 5*y* = *z.*

If the integers *x* and *y* satisfying the above equation do not exist simultaneously, *x* and *y* may satisfy *ax* + (*a-2*) *y = z*. The above process is repeated, until the integers *x* and *y* are determined. For example, it is further determined that the *x* and y satisfy 6*x +* 4*y = z.*

It should be noted that the minimum coefficient for *y* is 1.

If that the CORESET includes 45 REGs, then *x*=5 and *y*=3 satisfying 6*x* + 5*y = z* may be determined. Thus, it may be determined that there are 5 CCEs each including 6 REGs and 3 CCEs each including 5 REGs.

It may be understood that the specific number of REGs in each resource group including the number of REGs less than the first preset number may be set arbitrarily based on actual situations, which may be for example, indicated via indication information, specified in advance in a protocol, or configured according to a preset rule. The disclosure is not limited here.

In some embodiments, in response to the number of REGs being greater than the first preset number and less than the second preset number, there may be a plurality of such resource groups, each including the number of REGs that do not satisfy the first preset number.

For example, the number of resource groups each including the number of REGs greater than the first preset number and less than the second preset number may be determined as follows. If *z* represents the total number of REGs included in the CORESET, and *a* represents the first preset number. Then the number of resource groups each including the number of REGs greater than the first preset number and less than the second preset number may be determined as *z - floor*[*z*/*a*], in which *floor*[ ] denotes rounding down.

In the case of *z -floor*[*z*/*a*] × *a >floor*[*z*/*a*], then the number of resource groups each including the number of REGs greater than the first preset number and less than the second preset number may be determined as *floor*[*z*/*a*]*.*

If the CORESET includes 45 REGs and *a* is 6, then *floor* [45/6] = 7, and *z - floor* [*z*/*a*] × *a* = 3. In this case, it may be understood that the extra 3 REGs may be allocated to 3 resource groups each including 6 REGs, resulting in 4 resource groups each including 6 REGs and 3 resource groups each including 7 REGs. Alternatively, the extra REGs may be evenly allocated.

In other examples, according to actual situations, the extra 3 REGs may be allocated to two resource groups each including 6 REGs. In this case, there are 5 resource groups each including 6 REGs, 1 resource group including 7 REGs, and 1 resource group including 8 REGs.

Alternatively, in other examples, the extra 3 REGs may be allocated to 1 resource group including 6 REGs. In this case, there are 6 resource groups each including 6 REGs and 1 resource group including 9 REGs.

It may be understood that the priority may be given to evenly allocating the extra REGs to resource groups each including the number of REGs that satisfies the first preset number. Alternatively, the extra REGs may be allocated unevenly according to actual situations. For example, the allocating manner may be indicated via a signaling, specified in advance in a protocol, or pre-configured. The disclosure is not limited here.

In the disclosure, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, an index corresponding to the resource group including the number of REGs that does not satisfy the first preset number is higher or lower than an index corresponding to a resource group in the CORESET including the number of REGs that satisfies the first preset number.

In some embodiments, in response to there being one resource group including the number of REGs less than the first preset number, the index corresponding to the resource group is higher than the index corresponding to the resource group in the CORESET including the number of REGs that satisfies the first preset number. In embodiments of the disclosure, satisfying the first preset number may be considered as equaling the first preset number.

For example, in the case that there is one resource group including the number of REGs less than the first preset number, the index corresponding to the resource group is the maximum index among all resource group indexes in the CORESET.

In some embodiments, in response to there being one resource group including the number of REGs less than the first preset number, the index corresponding to the resource group is lower than the index corresponding to the resource group in the CORESET including the number of REGs that satisfies the first preset number.

For example, in the case that there is one resource group including the number of REGs less than the first preset number, the index corresponding to the resource group is the minimum index among all resource group indexes in the CORESET.

In some embodiments, in response to there being one resource group including the number of REGs greater than the first preset number and less than the second preset number, the index corresponding to the resource group is higher than the index corresponding to the resource group in the CORESET including the number of REGs that satisfies the first preset number.

For example, in the case that there is one resource group including the number of REGs greater than the first preset number and less than the second preset number, the index corresponding to the resource group is the maximum index among all resource group indexes in the CORESET.

In some embodiments, in response to there being one resource group including the number of REGs greater than the first preset number and less than the second preset number, the index corresponding to the resource group is lower than the index corresponding to the resource group in the CORESET including the number of REGs that satisfies the first preset number.

For example, in the cast that there is one resource group including the number of REGs greater than the first preset number and less than the second preset number, the index corresponding to the resource group is the minimum index among all resource group indexes in the CORESET.

In some embodiments, in response to there being the plurality of resource groups each including the number of REGs less than the first preset number, indexes corresponding to the resource groups are higher than the index corresponding to the resource group in the CORESET including the number of REGs that satisfies the first preset number.

For example, in the case that there are a plurality of resource groups each including the number of REGs less than the first preset number, indexes corresponding to the resource groups are equal to the maximum index among all resource group indexes in the CORESET.

In some embodiments, in response to there being the plurality of resource groups each including the number of REGs less than the first preset number, the indexes corresponding to the resource groups are lower than the index corresponding to the resource group in the CORESET including the number of REGs that satisfies the first preset number.

For example, in the case that there are the plurality of resource groups each including the number of REGs less than the first preset number, indexes corresponding to the resource groups are equal to the minimum index among all resource group indexes in the CORESET.

In some embodiments, in response to there being the plurality of resource groups each including the number of REGs greater than the first preset number and less than the second preset number, indexes corresponding to the resource groups are higher than the index corresponding to the resource group in the CORESET including the number of REGs that satisfies the first preset number.

For example, in the case that there are the plurality of resource groups each including the number of REGs greater than the first preset number and less than the second preset number, indexes corresponding to the resource groups are equal to the maximum index among all resource group indexes in the CORESET.

In some embodiments, in response to there being the plurality of resource groups each including the number of REGs greater than the first preset number and less than the second preset number, indexes corresponding to the resource groups are lower than the index corresponding to the resource group in the CORESET including the number of REGs that satisfies the first preset number.

For example, in the case that there are the plurality of resource groups each including the number of REGs greater than the first preset number and less than the second preset number, indexes corresponding to the resource groups are equal to the minimum index among all resource group indexes in the CORESET.

In the disclosure, the resource group including the number of REGs that do not satisfy the preset number may be determined via a position relationship of indexes in the CORESET, which facilitates transmitting the PDCCH via CCEs in the CORESET, and thus improves the resource utilization.

In the method for communication provided in embodiments of the disclosure, the first preset number is obtained via a pre-configuration or a protocol agreement.

In some embodiments, the first preset number is obtained via the pre-configuration.

In some embodiments, the first preset number is obtained via the protocol agreement.

In some embodiments, the first preset number may be 6.

The disclosure provides a plurality of manners for determining the first preset number, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, the method further includes: performing de-rate-matching on the PDCCH based on a number of REGs included in resources occupied by the PDCCH.

In some embodiments, the terminal may perform the de-rate-matching on the PDCCH based on an actual number of REGs included in resources occupied by the PDCCH.

For example, if a resource group occupied by the PDCCH includes more or fewer REGs, the terminal may perform the de-rate-matching based on the actual number of REGs included in the resource group occupied by the PDCCH.

The disclosure may perform the rate matching based on REGs actually occupied by the PDCCH, thus improving the resource utilization.

In the method for communication provided in embodiments of the disclosure, the resource group may include at least one of: a CCE; or a REG bundle.

Specifically, in some embodiments, the resource group includes the CCE.

In some embodiments, the resource group includes the REG bundle.

In some embodiments, the resource group includes the CCE and the REG bundle.

The disclosure provides a plurality of implementations of resource groups, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

Based on the same concept, the disclosure also provides a method for communication performed by a network device.

FIG. 4 is a flow chart illustrating a method for communication according to an exemplary embodiment. As shown in FIG. 4, the method is performed by the network device and may include the following steps S21 to S22.

At step S21, a PDCCH is sent based on a CORESET.

In some embodiments, the network device may send the PDCCH based on the CORESET. The CORESET may include a plurality of resource groups. There may be at least one resource group among the plurality of resource groups, which includes a number of REGs that does not satisfy a first preset number. Optionally, except for the resource group including the number of REGs that does not satisfy the first preset number, the numbers of REGs included in other resource groups satisfy the first preset number.

For example, the number of REGs that does not satisfy the first preset number may be considered as the number of REGs not satisfying a preset rule. The preset rule represents a rule that the number of REGs included in the resource group needs to satisfy under preset conditions. For example, the rule may specify that the number of REGs included in the resource group under preset conditions should be equal to the first preset number.

For example, the first preset number may be 6. For example, the first preset number may be determined by the network device itself or determined based on protocol rules. Determination by the network device itself may mean that the network device pre-configures the first preset number and determines it based on its own pre-configuration.

It may be understood that among the plurality of resource groups, there may exist at least one specific resource group. The number of REGs included in the specific resource group is not equal to the first preset number, such as 6. For example, the number of REGs included in the specific resource group may be greater than 6. For another example, the number of REGs included in the specific resource group may be less than 6.

In some embodiments, the specific resource group may be determined via an index in a CCE. For example, the index of the specific resource group is the maximum or minimum among indexes of other resource groups in the CCE.

It may be understood that, prior to S21, the method may further include the following step S22.

At step S22, the CORESET is determined.

In some embodiments, the network device may determine the CORESET to send the PDCCH based on corresponding resources in the CORESET.

For example, the network device may configure a CORESET, such as CORESET#0, and transmit corresponding indication information via a PBCH, for example, some parameters in a MIB indicating the configured CORESET. This enables the terminal to determine the CORESET configured by the network device by parsing the MIB received via the PBCH.

In the disclosure, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, the first preset number may be a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold. That is, the first preset number may be set to be identical to the number of REGs included in the resource group when the minimum system bandwidth supported by the terminal is greater than the bandwidth threshold; or the first preset number may be set to be identical to the number of REGs included in the resource group when the communication system used by the terminal for receiving the PDCCH is the communication system corresponding to the specific frequency band; or the first preset number may be set to be identical to the number of REGs included in the resource group when the minimum system bandwidth supported by the communication system is greater than the bandwidth threshold.

Specifically, in some embodiments, the first preset number may be the number of REGs included in the resource group in the case that the minimum system bandwidth supported by the terminal is greater than the bandwidth threshold.

For example, the bandwidth threshold may be 5 MHz, and the minimum system bandwidth supported by the terminal is greater than 5 MHz. For example, such terminals may include various terminals during R15 to R17. The minimum system bandwidths supported by such terminals are all greater than 5 MHz. It may be understood that the first preset number may be the number of REGs included in the resource group in the case of corresponding to various terminals during R15 to R17.

For example, in the case of corresponding to various terminals during R15 to R17, the number of REGs included in the resource group is 6, thus the first preset number is 6.

It may be understood that the network device may determine a minimum system bandwidth supported by the terminal via some capability information reported by the terminal.

In some embodiments, in the case that the minimum system bandwidth supported by the terminal is less than the bandwidth threshold, it may be determined that the CORESET may include a resource group including a number of REGs that does not satisfy the first preset number. For example, in the case that the bandwidth threshold may be 5 MHz and the minimum system bandwidth supported by the terminal (e.g., 3 MHz, 2.8 MHz, or 3.6 MHz) is less than 5 MHz, the CORESET may include a resource group including a number of REGs that does not satisfy the first preset number. For example, the number of REGs included in the specific resource group may be greater than the first preset number, or the number of REGs included in the specific resource group may be less than the first preset number. The first preset number is, for example, 6.

Specifically, in some embodiments, the first preset number may be the number of REGs included in the resource group in the case that the communication system used by the terminal for receiving the PDCCH is the communication system corresponding to the specific frequency band.

For example, when the communication system operates in the specific frequency band, it may be considered as being under preset conditions. The specific frequency band is, for example, any frequency band except for the n8, n26, n28, and n100. The communication system may be constituted by the terminal and the network device. In the communication system, data transmission is performed between the terminal and the network device. It may be understood that the first preset number may be the number of REGs included in the resource group in the case that the communication system operates in the specific frequency band.

For example, in the case that the communication system operates in any frequency band except for the n8, n26, n28, and n100, the number of REGs included in the resource group is 6, thus the first preset number is 6.

It may be understood that the network device may determine whether the communication system operates in a specific frequency band based on preset rules or a protocol agreement.

In some embodiments, in the case that the communication system used by the terminal for receiving the PDCCH is a communication system corresponding to dedicated frequency bands, it may be determined that the CORESET may include a resource group including a number of REGs that does not satisfy the first preset number. The dedicated frequency bands may be frequency bands such as n8, n26, n28, n100, etc. It may be understood that the dedicated frequency bands may be any frequency bands except for the aforementioned specific frequency bands.

For example, in the case that the communication system used by the terminal for receiving the PDCCH is of the dedicated frequency bands such as n8, n26, n28, or n100, the CORESET may include a resource group including a number of REGs that does not satisfy the first preset number. For example, the number of REGs included in the specific resource group may be greater than the first preset number, or the number of REGs included in the specific resource group may be less than the first preset number. The first preset number is, for example, 6.

Specifically, in some embodiments, the first preset number may be the number of REGs included in the resource group in the case that the minimum system bandwidth supported by the communication system is greater than the bandwidth threshold.

For example, the minimum system bandwidth supported by the communication system is greater than 5 MHz. It may be understood that this embodiment is from the perspective of the communication system, which may include various communication systems operating during R15 to R17. The first preset number may be the number of REGs included in the resource group in the case that the minimum system bandwidth supported by the communication system is greater than 5 MHz.

For example, in the case that the minimum system bandwidth supported by the communication system is greater than 5 MHz, the number of REGs included in the resource group is 6, thus the first preset number is 6.

It may be understood that the network device may determine whether the minimum system bandwidth supported by the communication system is greater than 5 MHz based on the preset rules or the protocol agreement.

In some embodiments, in the case that the minimum system bandwidth supported by the communication system is less than the bandwidth threshold, it may be determined that the CORESET may include a resource group including a number of REGs that does not satisfy the first preset number. For example, in the case that the bandwidth threshold may be 5 MHz and the minimum system bandwidth supported by the communication system (e.g., 3 MHz, 2.8 MHz, or 3.6 MHz) is less than 5 MHz, the CORESET may include a resource group including a number of REGs that does not satisfy the first preset number. For example, the number of REGs included in the specific resource group may be greater than the first preset number, or the number of REGs included in the specific resource group may be less than the first preset number. The first preset number is, for example, 6.

The various scenarios are adapted to the disclosure, and in corresponding scenarios, by enabling the number of REGs included in some resource groups to be greater than or less than a preset number, the CORESET may be divided into the integer number of resource groups, which facilitates transmitting the PDCCH via CCEs in the CORESET, and thus improves the resource utilization.

In the method for communication provided in embodiments of the disclosure, the number of REGs included in the at least one resource group among the plurality of resource groups that does not satisfy the first preset number, includes: the number of REGs included in the at least one resource group among the plurality of resource groups being less than the first preset number.

In some embodiments, the resource group including the number of REGs that does not satisfy the first preset number may be a resource group including a number of REGs that is less than the first preset number. That is, there may be at least one resource group among the plurality of resource groups that includes the number of REGs being less than the first preset number.

For example, there is at least one resource group that includes the number of REGs being less than 6.

In the disclosure, for the resource group including the number of REGs that does not satisfy the first preset number, the number of REGs may be less than the number of REGs in a conventional resource group, which facilitates division of the CORESET into the integer number of resource groups, facilitates transmitting the PDCCH via CCEs in the CORESET, and thus improves the resource utilization.

In the method for communication provided in embodiments of the disclosure, the number of REGs included in the at least one resource group among the plurality of resource groups that does not satisfy the first preset number, includes: the number of REGs included in the at least one resource group among the plurality of resource groups being greater than the first preset number and less than a second preset number.

In some embodiments, the resource group including the number of REGs that does not satisfy the first preset number may be a resource group including a number of REGs that is greater than the first preset number and less than the second preset number. That is, there may be at least one resource group among the plurality of resource groups that includes the number of REGs being greater than the first preset number and less than the second preset number.

The second preset number may be N times the first preset number, in which N is a positive integer greater than 2.

For example, there is at least one resource group that includes the number of REGs being greater than 6 and less than 12.

It may be understood that the purpose of setting the second preset number is to avoid an excessive number of REGs in the resource group including the number of REGs that does not satisfy the first preset number. When N is 2, it may be ensured a situation that a result after the first preset number is subtracted from the number of REGs included in the resource group including the number of REGs that does not satisfy the first preset number, still does not exceed the first preset number.

In the disclosure, for the resource group including the number of REGs that does not satisfy the first preset number, the number of REGs may be greater than the number of REGs in the conventional resource group and less than the second preset number, which facilitates division of the CORESET into the integer number of resource groups, which facilitates transmitting the PDCCH via CCEs in the CORESET, and thus improves the resource utilization.

In the method for communication provided in embodiments of the disclosure, there is one resource group including a number of REGs that do not satisfy the first preset number.

In some embodiments, in response to the number of REGs being less than the first preset number, there may be one resource group, including the number of REGs that do not satisfy the first preset number.

For example, if the CORESET includes 51 REGs, the first preset number is 6, and the resource group is a CCE. Then each of CCE#0 to CCE#7 may include 6 REGs, and CCE#8 includes 3 REGs.

In some embodiments, in response to the number of REGs being greater than the first preset number and less than the second preset number, there may be one resource group, including the number of REGs that do not satisfy the first preset number.

For example, if the CORESET includes 51 REGs, the first preset number is 6, the second preset number is 12, and the resource group is a CCE. Then each of CCE#0 to CCE#6 may include 6 REGs, and CCE#7 includes 9 REGs.

In the disclosure, by allowing that the number of REGs included in only one resource group is greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, there may be a plurality of such resource groups, each including the number of REGs that do not satisfy the first preset number.

In some embodiments, in response to the number of REGs being less than the first preset number, there are a plurality of resource groups each including the number of REGs that do not satisfy the first preset number.

For example, the number of resource groups each including the number of REGs less than the first preset number may be determined as follows. For example, it is assumed that integers *x* and *y* satisfy *ax +* (*a-l*) *y = z*, in which *z* represents the number of REGs included in the CORESET, and *a* represents the first preset number. Taking *a* is equal to 6 as an example, *x* and *y* should satisfy 6*x* + 5*y = z*.

If the integers *x* and *y* satisfying the above equation do not exist simultaneously, *x* and *y* may satisfy *ax* + (*a-2*) *y = z*. The above process is repeated, until the integers *x* and *y* are determined. For example, it is further determined that the *x* and *y* satisfy 6*x +* 4*y = z.*

It should be noted that the minimum coefficient for y is 1.

If that the CORESET includes 45 REGs, then *x*=5 and *y*=3 satisfying 6*x* + 5*y = z* may be determined. Thus, it may be determined that there are 5 CCEs each including 6 REGs and 3 CCEs each including 5 REGs.

It may be understood that the specific number of REGs in each resource group including the number of REGs less than the first preset number may be set arbitrarily based on actual situations, which may be for example, indicated via indication information, specified in advance in a protocol, or configured according to a preset rule. The disclosure is not limited here.

In some embodiments, in response to the number of REGs being greater than the first preset number and less than the second preset number, there may be a plurality of such resource groups, each including the number of REGs that do not satisfy the first preset number.

For example, the number of resource groups each including the number of REGs greater than the first preset number and less than the second preset number may be determined as follows. For example, assuming that z represents the total number of REGs included in the CORESET, and *a* represents the first preset number, then the number of resource groups each including the number of REGs greater than the first preset number and less than the second preset number may be determined as *z -floor*[*z*/*a*], in which *floor*[ ] denotes rounding down.

In the case of *z - floor*[*z*/*a*] × *a* > *floor*[*z*/*a*], then the number of resource groups each including the number of REGs greater than the first preset number and less than the second preset number may be determined as *floor*[*z*/*a*]*.*

If the CORESET includes 45 REGs and *a* is 6, then *floor* [45/6] *=* 7, and *z - floor* [*z*/*a*] × *a* = 3. In this case, it may be understood that the extra 3 REGs may be allocated to 3 resource groups each including 6 REGs, resulting in 4 resource groups each including 6 REGs and 3 resource groups each including 7 REGs. Alternatively, the extra REGs may be evenly allocated.

In other examples, according to actual situations, the extra 3 REGs may be allocated to two resource groups each including 6 REGs. In this case, there are 5 resource groups each including 6 REGs, 1 resource group including 7 REGs, and 1 resource group including 8 REGs.

Alternatively, in other examples, the extra 3 REGs may be allocated to 1 resource group including 6 REGs. In this case, there are 6 resource groups each including 6 REGs and 1 resource group including 9 REGs.

It may be understood that the priority may be given to evenly allocating the extra REGs to resource groups each including the number of REGs that satisfies the first preset number. Alternatively, the extra REGs may be allocated unevenly according to actual situations. For example, the allocating manner may be indicated via a signaling, specified in advance in a protocol, or pre-configured. The disclosure is not limited here.

In the disclosure, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, an index corresponding to the resource group including the number of REGs that does not satisfy the first preset number is higher or lower than an index corresponding to a resource group in the CORESET including the number of REGs that satisfies the first preset number.

In some embodiments, in response to there being one resource group including the number of REGs less than the first preset number, the index corresponding to the resource group is higher than the index corresponding to the resource group in the CORESET including the number of REGs that satisfies the first preset number. In embodiments of the disclosure, satisfying the first preset number may be considered as equaling the first preset number.

For example, in the case that there is one resource group including the number of REGs less than the first preset number, the index corresponding to the resource group is the maximum index among all resource group indexes in the CORESET.

In some embodiments, in response to there being one resource group including the number of REGs less than the first preset number, the index corresponding to the resource group is lower than the index corresponding to the resource group in the CORESET including the number of REGs that satisfies the first preset number.

For example, in the case that there is one resource group including the number of REGs less than the first preset number, the index corresponding to the resource group is the minimum index among all resource group indexes in the CORESET.

In some embodiments, in response to there being one resource group including the number of REGs greater than the first preset number and less than the second preset number, the index corresponding to the resource group is higher than the index corresponding to the resource group in the CORESET including the number of REGs that satisfies the first preset number.

For example, in the case that there is one resource group including the number of REGs greater than the first preset number and less than the second preset number, the index corresponding to the resource group is the maximum index among all resource group indexes in the CORESET.

In some embodiments, in response to there being one resource group including the number of REGs greater than the first preset number and less than the second preset number, the index corresponding to the resource group is lower than the index corresponding to the resource group in the CORESET including the number of REGs that satisfies the first preset number.

For example, in the cast that there is one resource group including the number of REGs greater than the first preset number and less than the second preset number, the index corresponding to the resource group is the minimum index among all resource group indexes in the CORESET.

In some embodiments, in response to there being the plurality of resource groups each including the number of REGs less than the first preset number, indexes corresponding to the resource groups are higher than the index corresponding to the resource group in the CORESET including the number of REGs that satisfies the first preset number.

For example, in the case that there are a plurality of resource groups each including the number of REGs less than the first preset number, indexes corresponding to the resource groups are equal to the maximum index among all resource group indexes in the CORESET.

In some embodiments, in response to there being the plurality of resource groups each including the number of REGs less than the first preset number, the indexes corresponding to the resource groups are lower than the index corresponding to the resource group in the CORESET including the number of REGs that satisfies the first preset number.

For example, in the case that there are the plurality of resource groups each including the number of REGs less than the first preset number, indexes corresponding to the resource groups are equal to the minimum index among all resource group indexes in the CORESET.

In some embodiments, in response to there being the plurality of resource groups each including the number of REGs greater than the first preset number and less than the second preset number, indexes corresponding to the resource groups are higher than the index corresponding to the resource group in the CORESET including the number of REGs that satisfies the first preset number.

For example, in the case that there are the plurality of resource groups each including the number of REGs greater than the first preset number and less than the second preset number, indexes corresponding to the resource groups are equal to the maximum index among all resource group indexes in the CORESET.

In some embodiments, in response to there being the plurality of resource groups each including the number of REGs greater than the first preset number and less than the second preset number, indexes corresponding to the resource groups are lower than the index corresponding to the resource group in the CORESET including the number of REGs that satisfies the first preset number.

For example, in the case that there are the plurality of resource groups each including the number of REGs greater than the first preset number and less than the second preset number, indexes corresponding to the resource groups are equal to the minimum index among all resource group indexes in the CORESET.

In the disclosure, the resource group including the number of REGs that do not satisfy the preset number may be determined via a position relationship of indexes in the CORESET, which facilitates transmitting the PDCCH via CCEs in the CORESET, and thus improves the resource utilization.

In the method for communication provided in embodiments of the disclosure, the first preset number is obtained via a pre-configuration or a protocol agreement.

In some embodiments, the first preset number is obtained via the pre-configuration.

In some embodiments, the first preset number is obtained via the protocol agreement.

In some embodiments, the first preset number may be 6.

The disclosure provides a plurality of manners for determining the first preset number, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In the method for communication provided in embodiments of the disclosure, the method further includes: performing rate-matching on the PDCCH based on a number of REGs included in resources occupied by the PDCCH.

In some embodiments, the network device may perform the rate-matching on the PDCCH based on an actual number of REGs included in resources occupied by the PDCCH.

For example, if a resource group occupied by the PDCCH includes more or fewer REGs, the network device may perform the rate-matching based on the actual number of REGs included in the resource group occupied by the PDCCH.

The disclosure may perform the rate matching based on REGs actually occupied by the PDCCH, thus improving the resource utilization.

In the method for communication provided in embodiments of the disclosure, the resource group may include at least one of: a CCE; or a REG bundle.

Specifically, in some embodiments, the resource group includes the CCE.

In some embodiments, the resource group includes the REG bundle.

In some embodiments, the resource group includes the CCE and the REG bundle.

The disclosure provides a plurality of implementations of resource groups, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In some implementations, the method for communication of the disclosure may be implemented as follows: the network device sends a PDCCH based on a CORESET; and the terminal receives the PDCCH based on the CORESET.

The CORESET may include a plurality of resource groups. There may be at least one resource group among the plurality of resource groups, which includes a number of REGs that is less than a first preset number. Optionally, except for the resource group including the number of REGs that is less than the first preset number, the numbers of REGs included in other resource groups satisfy the first preset number.

Satisfying the first preset number may be considered as equaling the first preset number. The first preset number is, for example, 6.

In some embodiments, the CORESET may include one resource group including the number of REGs that is less than the first preset number.

For example, when the CORESET includes 26 REGs, the first preset number is 6, and the resource group is a CCE, then each of CCE#0 to CCE#3 may include 6 REGs, and CCE#4 includes 2 REGs.

In some embodiments, the CORESET may include a plurality of resource groups each including may number of REGs that is less than the first preset number.

For example, when the CORESET includes 27 REGs, the first preset number is 6, and the resource group is a CCE, then each of CCE#0 to CCE#3 may include 6 REGs, CCE#4 includes 1 REG, and CCE#5 includes 2 REGs. Alternatively, each of CCE#0 to CCE#3 may include 6 REGs, and each of CCE#4 to CCE#6 may include 1 REG.

It may be understood that a specific number of REGs included in a specific resource group may be determined based on manners such as preset rules, a protocol agreement, and/or indication information. The disclosure is not limited here.

For specific implementations of the above embodiments, reference may be made to the descriptions in the corresponding embodiments of the aforementioned terminal and network device. The disclosure will not be repeated here.

In the disclosure, for the resource group including the number of REGs that does not satisfy the first preset number, the number of REGs may be less than the number of REGs in a conventional resource group, which facilitates division of the CORESET into the integer number of resource groups, facilitates transmitting the PDCCH via CCEs in the CORESET, and thus improves the resource utilization.

In some implementations, the method for communication of the disclosure may be implemented as follows: the network device sends a PDCCH based on a CORESET; and the terminal receives the PDCCH based on the CORESET.

The CORESET may include a plurality of resource groups. There may be at least one resource group among the plurality of resource groups, which includes a number of REGs that is greater than the first preset number and less than a second preset number. Optionally, except for the resource group including the number of REGs that is greater than the first preset number and less than the second preset number, the numbers of REGs included in other resource groups satisfy the first preset number.

Satisfying the first preset number may be considered as equaling the first preset number. The first preset number is, for example, 6.

In some embodiments, the CORESET may include one resource group including the number of REGs that is greater than the first preset number and less than the second preset number.

For example, when the CORESET includes 32 REGs, the first preset number is 6, the second preset number is 12, and the resource group is a CCE, then each of CCE#0 to CCE#3 may include 6 REGs, and CCE#4 includes 8 REGs.

In some embodiments, the CORESET may include a plurality of resource groups each including may number of REGs that is greater than the first preset number and less than the second preset number.

For example, when the CORESET includes 33 REGs, the first preset number is 6, the second preset number is 12, and the resource group is a CCE, then each of CCE#0 to CCE#2 may include 6 REGs, CCE#3 includes 8 REGs, and CCE#4 includes 7 REGs. Alternatively, each of CCE#0 to CCE#1 may include 6 REGs, and each of CCE#2 to CCE#4 may include 7 REGs.

It may be understood that a specific number of REGs in a specific resource group may be determined based on manners such as preset rules, a protocol agreement, and/or indication information. The disclosure is not limited here.

For specific implementations of the above embodiments, reference may be made to the descriptions in the corresponding embodiments of the aforementioned terminal and network device. The disclosure will not be repeated here.

In the disclosure, for the resource group including a number of REGs that does not satisfy the first preset number, the number of REGs may be greater than the number of REGs in a conventional resource group and less than the second preset number, which facilitates division of the CORESET into the integer number of resource groups, facilitates transmitting the PDCCH via CCEs in the CORESET, and thus improves the resource utilization.

In some implementations, the disclosure further provides a method for determining a number of REGs in a resource group, that is, a method for determining how many resource groups, each of which includes a number of REGs do not satisfy the first preset number, and determining how many REGs are included in each resource group including the number of REGs that does not satisfy the first preset number.

In some embodiments, if the number of REGs not satisfying the first preset number means the number of REGs is less than the first preset number, it may be assumed that integers *x* and *y* satisfy *ax +* (*a-l*) *y = z*, in which *z* represents the number of REGs included in the CORESET, and *a* represents the first preset number.

For example, taking *a* is equal to 6 as an example, *x* and *y* should satisfy 6*x* + 5*y = z.*

If the integers *x* and *y* satisfying the above equation do not exist simultaneously, *x* and *y* may satisfy *ax* + (*a-2*) *y* = *z*. The above process is repeated, until the integers *x* and *y* are determined. For example, it is further determined that the *x* and *y* satisfy 6*x +* 4*y = z.*

It should be noted that the minimum coefficient for y is 1.

It may be understood that the disclosure may also indicate the specific number of REGs included in the resource group including the number of REGs that does not satisfy the first preset number, or indicate which specific resource group includes the number of REGs that does not satisfy the first preset number, based on manners such as preset rules, a protocol agreement, and/or indication information. The disclosure is not limited here.

In some embodiments, if the number of REGs not satisfying the first preset number means the number is greater than the first preset number and less than the second preset number, assuming that z represents the number of REGs included in the CORESET, and *a* represents the first preset number, then the number of resource groups each including the number of REGs greater than the first preset number and less than the second preset number may be determined as *z - floor*[*z*/*a*], in which *floor*[ ] denotes rounding down.

In the case of *z -floor*[*z*/*a*] × *a >floor*[*z*/*a*], then the number of resource groups each including the number of REGs greater than the first preset number and less than the second preset number may be determined as *floor*[*z*/*a*]*.*

It may be understood that for REGs insufficient to form resource groups, one manner is to evenly allocate the REGs to resource groups each including the number of REGs equal to the first preset number, causing these resource groups to each include the number of REGs greater than the first preset number and less than the second preset number. It may be understood that the disclosure may also indicate the specific number of REGs included in the resource group including the number of REGs that does not satisfy the first preset number, or indicate which specific resource group includes the number of REGs that does not satisfy the first preset number, based on manners such as preset rules, a protocol agreement, and/or indication information. The disclosure is not limited here.

For specific implementations of the above embodiments, reference may be made to the foregoing descriptions. The disclosure will not be repeated here.

The disclosure provides a plurality of manners for determining the number of REGs in resource groups, ensuring division of the CORESET into the integer number of resource groups, transmitting the PDCCH via CCEs in the CORESET, thus improving the resource utilization.

In some implementations, the disclosure further provides a manner for PDCCH rate matching.

In some embodiments, the network device may perform the rate matching based on the number of REGs in resource groups actually occupied by the PDCCH, and map rate-matched data resources to corresponding REGs for transmission. Correspondingly, the terminal may perform de-rate-matching based on the number of REGs in resource groups actually occupied by the PDCCH.

For example, if a resource group 1 occupied by the PDCCH includes 6 REGs, and a resource group 2 occupied by the PDCCH includes 3 REGs, the network device performs the rate matching based on the 9 REGs and maps resources to corresponding REGs, then sends the PDCCH. After receiving the PDCCH, the terminal may perform the de-rate-matching based on the 9 REGs to obtain corresponding information.

For specific implementations of the above embodiments, reference may be made to the descriptions in the corresponding embodiments of the aforementioned terminal and network device. The disclosure will not be repeated here.

The disclosure may perform the rate matching based on REGs actually occupied by the PDCCH, thus improving the resource utilization.

It should be noted that those skilled in the art may understand that various embodiments/examples involved in the above embodiments of the disclosure may be used in combination with the embodiments described above or may be used independently. The principle of implementation is similar whether used independently or in combination with the embodiments described above. In the disclosure, some of the embodiments are illustrated as embodiments used together. Those skilled in the art may understand that such an illustrative description is not a limitation of the embodiments of the disclosure.

Based on the same concept, the disclosure also provides an apparatus for communication and a communication device.

It may be understood that the apparatus for communication and the communication device provided in the embodiments of the disclosure includes, in order to realize the above-described functions, a hardware structure and/or a software module corresponding to the implementation of each function. In combination with the units and algorithmic steps of the various examples disclosed in the embodiments of the disclosure, the embodiments of the disclosure are capable of being implemented in the form of the hardware or a combination of hardware and computer software. Whether a particular function is performed in the form of hardware or in the form of computer software driving hardware depends on a particular application and design constraints of a technical solution. Those skilled in the art may use different ways to implement the described functions for each particular application, but such implementations should not be considered outside the scope of the technical solutions of the embodiments of the disclosure.

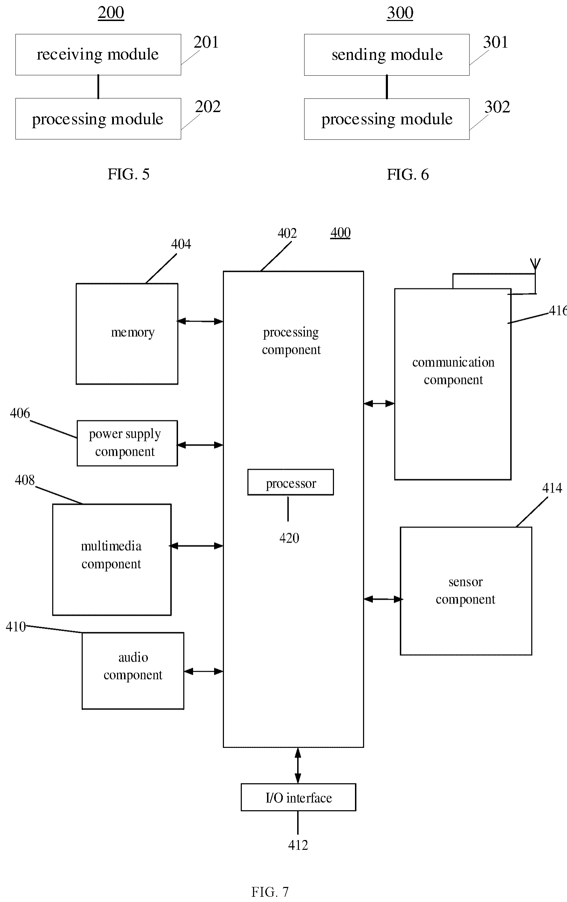

FIG. 5 is a block diagram illustrating an apparatus for communication according to an exemplary embodiment. Referring to FIG. 5, the apparatus 200 includes a receiving module 201, configured to receive a PDCCH based on a CORESET; in which the CORESET includes a plurality of resource groups, and a number of REGs included in at least one resource group among the plurality of resource groups does not satisfy a first preset number.

In the disclosure, by enabling a number of REGs included in some resource groups to be greater than or less than a preset number, the CORESET may be divided into the integer number of resource groups, which facilitates transmitting the PDCCH via CCEs in the CORESET, and thus improves the resource utilization.

In some implementations, the first preset number is a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold.

The various scenarios are adapted to the disclosure, and in corresponding scenarios, by enabling the number of REGs included in some resource groups to be greater than or less than a preset number, the CORESET may be divided into the integer number of resource groups, which facilitates transmitting the PDCCH via CCEs in the CORESET, and thus improves the resource utilization.

In some implementations, the number of REGs included in the at least one resource group among the plurality of resource groups that does not satisfy the first preset number, includes: the number of REGs included in the at least one resource group among the plurality of resource groups being less than the first preset number.

In the disclosure, for the resource group including the number of REGs that does not satisfy the first preset number, the number of REGs may be less than the number of REGs in a conventional resource group, which facilitates division of the CORESET into the integer number of resource groups, facilitates transmitting the PDCCH via CCEs in the CORESET, and thus improves the resource utilization.

In some implementations, the number of REGs included in the at least one resource group among the plurality of resource groups that does not satisfy the first preset number, includes: the number of REGs included in the at least one resource group among the plurality of resource groups being greater than the first preset number and less than a second preset number.

In the disclosure, for the resource group including the number of REGs that does not satisfy the first preset number, the number of REGs may be greater than the number of REGs in the conventional resource group and less than the second preset number, which facilitates division of the CORESET into the integer number of resource groups, which facilitates transmitting the PDCCH via CCEs in the CORESET, and thus improves the resource utilization.

In some implementations, there is one resource group including a number of REGs that do not satisfy the first preset number.

In the disclosure, by allowing that the number of REGs included in only one resource group is greater than or less than the preset number, the CORESET may be divided into the integer number of resource groups, which facilitates transmitting the PDCCH via CCEs in the CORESET, and thus improves the resource utilization.

In some implementations, there are a plurality of resource groups each including a number of REGs that do not satisfy the first preset number.

In the disclosure, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In some implementations, an index corresponding to the resource group including the number of REGs that do not satisfy the first preset number is higher or lower than an index corresponding to a resource group in the CORESET including a number of REGs that satisfies the first preset number.

In the disclosure, the resource group including the number of REGs that do not satisfy the preset number may be determined via a position relationship of indexes in the CORESET, which facilitates transmitting the PDCCH via CCEs in the CORESET, and thus improves the resource utilization.

In some implementations, the first preset number is obtained via a pre-configuration or a protocol agreement.

The disclosure provides a plurality of manners for determining the first preset number, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In some implementations, the apparatus further includes: a processing module 202, configured to perform de-rate-matching on the PDCCH based on a number of REGs included in resources occupied by the PDCCH.

The disclosure may perform the rate matching based on REGs actually occupied by the PDCCH, thus improving the resource utilization.

In some implementations, the resource group includes at least one of: a CCE; or a REG bundle.

The disclosure provides a plurality of implementations of resource groups, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

FIG. 6 is a block diagram illustrating another apparatus for communication according to an exemplary embodiment. Referring to FIG. 6, the apparatus 300 includes a sending module 301, configured to send a PDCCH based on a CORESET; in which the CORESET includes a plurality of resource groups, and a number of REGs included in at least one resource group among the plurality of resource groups does not satisfy a first preset number.

In the disclosure, by enabling a number of REGs included in some resource groups to be greater than or less than a preset number, the CORESET may be divided into the integer number of resource groups, which facilitates transmitting the PDCCH via CCEs in the CORESET, and thus improves the resource utilization.

In some implementations, the first preset number is a number of REGs included in the resource group under at least one of following conditions that: a minimum system bandwidth supported by the terminal is greater than a bandwidth threshold; a communication system used by the terminal for receiving the PDCCH is a communication system corresponding to a specific frequency band; or a minimum system bandwidth supported by the communication system is greater than a bandwidth threshold.

The various scenarios are adapted to the disclosure, and in corresponding scenarios, by enabling the number of REGs included in some resource groups to be greater than or less than a preset number, the CORESET may be divided into the integer number of resource groups, which facilitates transmitting the PDCCH via CCEs in the CORESET, and thus improves the resource utilization.

In some implementations, the number of REGs included in the at least one resource group among the plurality of resource groups that does not satisfy the first preset number, includes: the number of REGs included in the at least one resource group among the plurality of resource groups being less than the first preset number.

In the disclosure, for the resource group including the number of REGs that does not satisfy the first preset number, the number of REGs may be less than the number of REGs in a conventional resource group, which facilitates division of the CORESET into the integer number of resource groups, facilitates transmitting the PDCCH via CCEs in the CORESET, and thus improves the resource utilization.

In some implementations, the number of REGs included in the at least one resource group among the plurality of resource groups that does not satisfy the first preset number, includes: the number of REGs included in the at least one resource group among the plurality of resource groups being greater than the first preset number and less than a second preset number.

In the disclosure, for the resource group including the number of REGs that does not satisfy the first preset number, the number of REGs may be greater than the number of REGs in the conventional resource group and less than the second preset number, which facilitates division of the CORESET into the integer number of resource groups, which facilitates transmitting the PDCCH via CCEs in the CORESET, and thus improves the resource utilization.

In some implementations, there is one resource group including a number of REGs that do not satisfy the first preset number.

In the disclosure, by allowing that the number of REGs included in only one resource group is greater than or less than the preset number, the CORESET may be divided into the integer number of resource groups, which facilitates transmitting the PDCCH via CCEs in the CORESET, and thus improves the resource utilization.

In some implementations, there are a plurality of resource groups each including a number of REGs that do not satisfy the first preset number.

In the disclosure, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In some implementations, an index corresponding to the resource group including the number of REGs that do not satisfy the first preset number is higher or lower than an index corresponding to a resource group in the CORESET including a number of REGs that satisfies the first preset number.

In the disclosure, the resource group including the number of REGs that do not satisfy the preset number may be determined via a position relationship of indexes in the CORESET, which facilitates transmitting the PDCCH via CCEs in the CORESET, and thus improves the resource utilization.

In some implementations, the first preset number is obtained via a pre-configuration or a protocol agreement.

The disclosure provides a plurality of manners for determining the first preset number, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

In some implementations, the apparatus further includes: a processing module, configured to perform rate-matching on the PDCCH based on a number of REGs included in resources occupied by the PDCCH.

The disclosure may perform the rate matching based on REGs actually occupied by the PDCCH, thus improving the resource utilization.

In some implementations, the resource group includes at least one of: a CCE; or a REG bundle.

The disclosure provides a plurality of manners for determining the first preset number, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

It may be understood that the apparatus 200 may also include a sending module, and the apparatus 300 may also include a receiving module. Of course, the apparatus 200 and the apparatus 300 may also include any other possible modules, and the disclosure is not limited here.

Regarding the apparatus in the above embodiments, the specific manner in which each module performs operations has been described in detail in the embodiments related to the method, and will not be described in detail here.

FIG. 7 is a block diagram illustrating a communication device according to an exemplary embodiment. For example, the device 400 may be any terminal such as a cell phone, a computer, a digital broadcasting terminal, a message transceiver device, a gaming console, a tablet device, a medical device, a fitness device, a personal digital assistant, etc.

Referring to FIG. 7, the device 400 may include one or more of the following components: a processing component 402, a memory 404, a power supply component 406, a multimedia component 408, an audio component 410, an inputs/outputs (I/O) interface 412, a sensor component 414, and a communication component 416.

The processing component 402 generally controls the overall operation of the device 400, such as operations associated with displays, telephone calls, data communications, camera operations, and recording operations. The processing component 402 may include one or more processors 420 to execute instructions to accomplish all or some of the steps of the method described above. In addition, the processing component 402 may include one or more modules to facilitate interaction between the processing component 402 and other components. For example, the processing component 402 may include a multimedia module to facilitate interaction between the multimedia component 408 and the processing component 402.

The memory 404 is configured to store various types of data to support operation at the device 400. Examples of such data include instructions for any application or method operated on the device 400, contact data, phone book data, messages, pictures, videos, etc. The memory 404 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 406 provides power to the various components of the device 400. The power supply component 406 may include a power management system, one or more power supplies, and other components associated with generating, managing, and distributing power for the device 400.

The multimedia component 408 includes a screen providing an output interface between the device 400 and a user. In some embodiments, the screen may include a liquid crystal display (LCD) and a touch panel (TP). In case the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a duration and pressure associated with the touch or swipe action. In some embodiments, the multimedia component 408 includes a front-facing camera and/or a rear-facing camera. The front camera and/or the rear camera may receive external multimedia data when the device 400 is in an operating mode, such as a shooting mode or a video mode. Each of the front camera or the rear camera may be a fixed optical lens system or have a focal length and an optical zoom capability.

The audio component 410 is configured to output and/or input audio signals. For example, the audio component 410 includes a microphone (MIC) that is configured to receive external audio signals when the device 400 is in an operational mode, such as a call mode, a recording mode, and a voice recognition mode. The received audio signals may be further stored in the memory 404 or transmitted via the communication component 416. In some embodiments, the audio component 410 further includes a speaker for outputting audio signals.

The I/O interface 412 provides an interface between the processing component 402 and a peripheral interface module, the peripheral interface module may be a keypad, a click wheel, buttons, etc. The buttons may include, but are not limited to: a home button, a volume button, a start button, and a lock button.

The sensor component 414 includes one or more sensors for providing various aspects of status assessments for the device 400. For example, the sensor component 414 may detect an open/closed state of the device 400, the relative positioning of components, such as the components being the display and keypad of the device 400, the sensor component 414 may also detect a change in the position of the device 400 or one component of the device 400, the presence or absence of user contact with the device 400, the orientation of the device 400 or acceleration/deceleration of the device 400, and the temperature change of the device 400. The sensor component 414 may include a proximity sensor configured to detect the presence of a nearby object in the absence of any physical contact. The sensor component 414 may also include an optical sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate communication between the device 400 and other devices by wired or wireless means. The device 400 may access a wireless network based on a communication standard, such as Wi-Fi, 2G or 3G, or their combination. In an exemplary embodiment, the communication component 416 receives broadcast signals or broadcast-related information from an external broadcast management system in a broadcast channel. In an exemplary embodiment, the communication component 416 further includes a near field communication (NFC) module to facilitate short-range communication. For example, in the NFC module may be implemented based on radio frequency identification (RFID) technology, infrared data association (IrDA) technology, ultra wide band (UWB) technology, Bluetooth (BT) technology, and other technologies.

In exemplary embodiments, the device 400 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In an exemplary embodiment, the disclosure also provides a non-transitory computer-readable storage medium including instructions, such as the memory 404 described above. The instructions may be executed by a processor 420 of the device 400 to complete the method for communication. For example, the non-transitory computer-readable storage medium may be a ROM, a RAM, a CD-ROM, a magnetic tape, a floppy disk, an optical data storage device, etc.

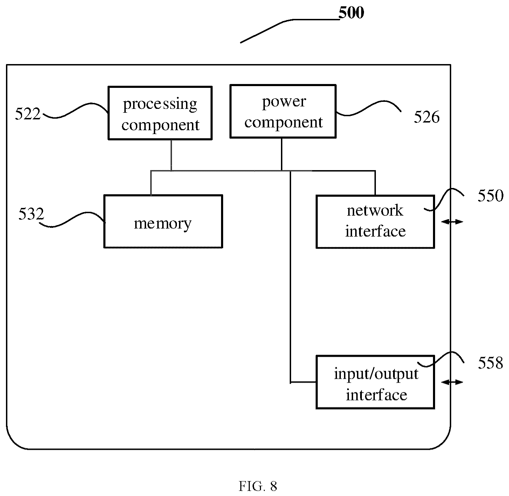

FIG. 8 is a block diagram illustrating another communication device according to an exemplary embodiment. For example, the communication device 500 may be provided as a base station or a server. Referring to FIG. 8, the communication device 500 includes a processing component 522, which further includes one or more processors, and a memory resource represented by a memory 532 for storing instructions that may be executed by the processing component 522, such as an application program. The application program stored in memory 532 may include one or more modules each corresponding to a set of instructions. In addition, the processing component 522 is configured to execute the instructions to perform the method described above.

The communication device 500 may also include a power component 526 configured to perform power management of the communication device 500, a wired or wireless network interface 550 configured to connect the communication device 500 to a network, and an input/output (I/O) interface 558. The communication device 500 may operate an operating system based on the operating system stored in the memory 532.

In the disclosure, by enabling the number of REGs included in some resource groups to be greater than or less than the preset number, the CORESET may be divided into the integer number of resource groups, which facilitates transmitting the PDCCH via CCEs in the CORESET, and thus improves the resource utilization.

It may be understood that "a plurality of" in the disclosure refers to two or more, and other quantifiers are similar. The term "and/or" may describe association relationships of associated objects, indicating that there may be three types of relationships, for example, A and/or B, which may mean: A exists alone, A and B exist at the same time, and B exists alone. The character "/" generally indicates that the associated objects before and after the character "/" are in an "or" relationship. The singular forms "a/an", "said" and "the" are also intended to include the plural forms unless the context clearly dictates otherwise.

It may be further understood that the terms "first", "second", etc., are used to describe various types of information, but such information should not be limited to these terms. These terms are only configured to distinguish the same type of information from one another and do not indicate a particular order or level of importance. Indeed, the expressions "first", "second", etc. may be used completely interchangeably. For example, without departing from the scope of the embodiments of the disclosure, first information may also be called second information, and similarly, second information may also be called first information.

It may be further understood that in the disclosure, the meaning of the terms "in response to" and "if" depends on the context and the actual scenarios in which they are used. As used herein, the term " in response to " may be interpreted as "in the case that/ in the case of" or "when" or "if" or "in case of/ in case that".

It may be further understood that although operations are described in a specific order in the figures according to the embodiments of the disclosure, it should not be understood as requiring that these operations be performed in the specific order illustrated or in a serial order, or that perform all operations illustrated to obtain the desired result. In certain circumstances, multitasking and parallel processing may be advantageous.

Other embodiments of the present disclosure will be apparent to those skilled in the art from consideration of the specification and practice of the present disclosure disclosed here. This application is intended to cover any variations, uses, or adaptations of the present disclosure following the general principles of the disclosure and including common knowledge or conventional technical means in the art that are not disclosed herein.

It should be understood that the embodiments of the disclosure are not limited to the precise structures described above and shown in the drawings, and various modifications and changes may be made without departing from the scope thereof. The scope of the embodiments of the disclosure is limited only by the appended claims.

## Claims

1. A method for communication, performed by a terminal, comprising:
receiving a physical downlink control channel (PDCCH) based on a control resource set (CORESET);
wherein the CORESET comprises a plurality of resource groups, and a number of resource element groups (REGs) comprised in at least one resource group among the plurality of resource groups does not satisfy a first preset number.

2. The method according to claim 1, wherein the first preset number is a number of REGs comprised in the resource group under at least one of following conditions that:
a minimum system bandwidth supported by the terminal is greater than a bandwidth threshold;
a communication system used by the terminal for receiving the PDCCH is a communication system corresponding to a specific frequency band; or
a minimum system bandwidth supported by the communication system is greater than a bandwidth threshold.

3. The method according to claim 1 or 2, wherein the number of REGs comprised in the at least one resource group among the plurality of resource groups that does not satisfy the first preset number, comprises:
the number of REGs comprised in the at least one resource group among the plurality of resource groups being less than the first preset number.

4. The method according to claim 1 or 2, wherein the number of REGs comprised in the at least one resource group among the plurality of resource groups that does not satisfy the first preset number, comprises:
the number of REGs comprised in the at least one resource group among the plurality of resource groups being greater than the first preset number and less than a second preset number.

5. The method according to claim 3 or 4, wherein there is one resource group comprising a number of REGs that do not satisfy the first preset number.

6. The method according to claim 3 or 4, wherein there are a plurality of resource groups each comprising a number of REGs that do not satisfy the first preset number.

7. The method according to claim 5 or 6, wherein an index corresponding to the resource group comprising the number of REGs that do not satisfy the first preset number is higher or lower than an index corresponding to a resource group in the CORESET comprising a number of REGs that satisfies the first preset number.

8. The method according to any one of claims 1 to 7, wherein the first preset number is obtained via a pre-configuration or a protocol agreement.

9. The method according to any one of claims 1 to 8, further comprising:
performing de-rate-matching on the PDCCH based on a number of REGs comprised in resources occupied by the PDCCH.

10. The method according to any one of claims 1 to 9, wherein the resource group comprises at least one of:
a control channel element (CCE); or
a REG bundle.

11. A method for communication, performed by a network device, comprising:
sending a physical downlink control channel (PDCCH) based on a control resource set (CORESET);
wherein the CORESET comprises a plurality of resource groups, and a number of resource element groups (REGs) comprised in at least one resource group among the plurality of resource groups does not satisfy a first preset number.

12. The method according to claim 11, wherein the first preset number is a number of REGs comprised in the resource group under at least one of following conditions that:
a minimum system bandwidth supported by the terminal is greater than a bandwidth threshold;
a communication system used by the terminal for receiving the PDCCH is a communication system corresponding to a specific frequency band; or
a minimum system bandwidth supported by the communication system is greater than a bandwidth threshold.

13. The method according to claim 11 or 12, wherein the number of REGs comprised in the at least one resource group among the plurality of resource groups that does not satisfy the first preset number, comprises:
the number of REGs comprised in the at least one resource group among the plurality of resource groups being less than the first preset number.

14. The method according to claim 11 or 12, wherein the number of REGs comprised in the at least one resource group among the plurality of resource groups that does not satisfy the first preset number, comprises:
the number of REGs comprised in the at least one resource group among the plurality of resource groups being greater than the first preset number and less than a second preset number.

15. The method according to claim 13 or 14, wherein there is one resource group comprising a number of REGs that do not satisfy the first preset number.

16. The method according to claim 13 or 14, wherein there are a plurality of resource groups each comprising a number of REGs that do not satisfy the first preset number.

17. The method according to claim 15 or 16, wherein an index corresponding to the resource group comprising the number of REGs that do not satisfy the first preset number is higher or lower than an index corresponding to a resource group in the CORESET comprising a number of REGs that satisfies the first preset number.

18. The method according to any one of claims 11 to 17, wherein the first preset number is obtained via a pre-configuration or a protocol agreement.

19. The method according to any one of claims 11 to 18, further comprising:
performing rate-matching on the PDCCH based on a number of REGs comprised in resources occupied by the PDCCH.

20. The method according to any one of claims 11 to 19, wherein the resource group comprises at least one of:
a control channel element (CCE); or
a REG bundle.

21. An apparatus for communication, comprising:
a receiving module, configured to receive a physical downlink control channel (PDCCH) based on a control resource set (CORESET);
wherein the CORESET comprises a plurality of resource groups, and a number of resource element groups (REGs) comprised in at least one resource group among the plurality of resource groups does not satisfy a first preset number.

22. An apparatus for communication, comprising:
a sending module, configured to send a physical downlink control channel (PDCCH) based on a control resource set (CORESET);
wherein the CORESET comprises a plurality of resource groups, and a number of resource element groups (REGs) comprised in at least one resource group among the plurality of resource groups does not satisfy a first preset number.

23. A communication device, comprising:
a processor; and
a memory storing instructions executable by the processor;
wherein the processor is configured to: perform the method according to any one of claims 1 to 10.

24. A communication device, comprising:
a processor; and
a memory storing instructions executable by the processor;
wherein the processor is configured to: perform the method according to any one of claims 11 to 20.

25. A non-transitory computer-readable storage medium, wherein when instructions in the storage medium are executed by a processor of a terminal, the terminal is caused to perform the method according to any one of claims 1 to 10.

26. A non-transitory computer-readable storage medium, wherein when instructions in the storage medium are executed by a processor of a network device, the network device is caused to perform the method according to any one of claims 11 to 20.
